# EUROPEAN PATENT APPLICATION

(11) **EP 4 422 066 A1**
(43) Date of publication of application: **28.08.2024**
(21) Application number: 22882272.2
(22) Date of filing: 09.05.2022
(51) Int. Cl.: H02S 20/26, H02S 20/10, E01C 9/00, E01C 11/00, F24S 25/00, E03B 3/02, E03F 5/10

(54) **PHOTOELECTRIC WATER-PERMEABLE PAVEMENT UNDERGROUND WATER STORAGE AUTOMATION SYSTEM**

(30) Priority: 20.10.2021 CN 202111218202
(71) Applicant: Chen, Jui-Wen, New Taipei City 238, Taiwan (TW)
(72) Inventor: Chen, Jui-Wen, New Taipei City 238, Taiwan (TW)
(74) Representative: Horak, Michael
(86) International application number: PCT/CN2022/091724
(87) International publication number: WO 2023/065647

(57) **Abstract**

A photoelectric water-permeable pavement underground water storage automation system includes a photoelectric module (10), a water-permeable unit (20), and a water-filled structure (30). The photoelectric module (10) is arranged on a ground surface and includes a base (11). A solar panel (12) is mounted on a top of the base (11). Fixing members (112) are provided on a bottom of the base (11) and positioned on the water-permeable unit (20). A bare empty area (113) is provided inside the base (11). Communication pipes (13) are connected to and extended outward from the bare empty area (113) to communicate with adjacent bases (11). The water-permeable unit (20) is a water-permeable pavement including a frame structure formed of multiple vertical water-permeable pipes and poured with concrete slurry. The water-filled structure (30) is an underground water storage space formed of multiple-hole hollow unit cells (30a). A water guide layer (B) is provided at the top of the water-filled structure (30) buried in an underground layer below the water-permeable unit (20).

## Description

### TECHNICAL FIELD OF THE INVENTION

The present invention relates to a photoelectric water-permeable pavement underground water storage automation system, and more particularly to a catastrophe-preventing pavement that is not only constructed as a green-energy pavement that includes a solar energy power system, but also has an effect of fast conducting and draining rainwater and storing water as a feature providing subsequent reuse of rainwater.

### DESCRIPTION OF THE PRIOR ART

From the ancient time, soils provide functions of water collection and water retention. However, due to increasing expansion of cities, all sorts of man-made facility have been massively built so that non-water-permeable pavements are continuously increased, resulting in catchment basins losing the functionality of water retention and also leading to a great increase of runoff flows on the ground surface, this, in combination with climate change caused by global warming, making all regions facing an increased strain of flooding protection.

Thus, to fight against the global warming in order to reduce the loading of the environment and the negative impacts caused thereby, recently, various regions proposed responsively regulating measures and sustainable development policies, such as carrying out policies regarding sponge cities and energy transition. The sponge city is a novel city model in which functions of flooding prevention and ecology protection are built in the city, such as building water permeable roads to replace non-water-permeable roads to achieve water absorption, water storage, water seeping, and water cleaning during raining and to release water moisture during dry and hot time to improve the heat island effect for preventing expansion of global warming. Energy transition concerns popularization of use of renewable energy in order to improve energy structure through green energy and to reduce emission of greenhouse gases, improve environment quality, and leave a clean earth to the future generations.

In view of the above, based on the above-described needs, the present inventor made enthusiastic researches and designed assembly to eventually create, through careful evaluations, the present invention that is effective and novel, and useful.

### SUMMARY OF THE INVENTION

The primary objective of the present invention is to provide a photoelectric water-permeable pavement underground water storage automation system, which not only uses a solar panel to convert energy of light into electrical energy, but also quickly drains rainwater on the ground surface to the underground so as to lower down the probability of occurrence of flooding on the ground surface and also to re-supplement the underground water resources to be stored for subsequent operations of automatic cleaning the solar panel and lowering temperature to thereby realize a ground surface pavement that achieves effects of catastrophe prevention and reuse of green energy of photoelectricity and water storage.

To achieve the above objective, the present invention provides a photoelectric water-permeable pavement underground water storage automation system, which comprises a photoelectric module, a water-permeable unit, and a water-filled structure:
the photoelectric module being positioned on a ground surface and comprises a base, the base having a periphery in which a water-permeable channel is arranged, the base being provided, on a top thereof, with an enclosure frame, the enclosure frame having an interior in which a solar panel is received and mounted, the base having a bottom face on which fixing members are arranged for positioning atop the water-permeable unit, a bare empty area being formed in an interior of the base, a periphery of the bare empty area being formed with through holes for receiving communication pipes to fit therein for inter-connecting and communicating with an adjacent base;
the water-permeable unit comprises a water-permeable pavement and is arranged under the photoelectric module; and
the water-filled structure comprises an underground water storage space and is buried in an underground layer under the water-permeable unit;
wherein the pavement configuration formed of the above components allows the photoelectric module to convert energy of sun light into electrical energy for use and also quickly drains rainwater to underground by means of the water-permeable unit to store in the water-filled structure for subsequent use.

The efficacy of the present invention is that the photoelectric water-permeable pavement that is formed of various components, in addition to allowing people and vehicles to pass thereon, is such that in a sunny day, the photoelectric module arranged on the ground surface converts the energy of the sun light into electrical energy for use. During raining, rainwater can be quickly drained through each of the drainage holes to the underground so as to not only prevent the solar panel from being soaked in water but also to prevent the chance of occurrence of flooding on the ground surface and also to use the water-filled structure under the pavement to recover and store rainwater and also re-supplement the underground water resources to realize a ground pavement that features both green energy and catastrophe prevention and also uses the rainwater so recovered for storage and subsequent automatic cleaning of the photoelectric panels and temperature lowering, and also for uses of general purposes.

### BRIEF DESCRIPTION OF THE DRAWINGS

FIG. 1 is a perspective view showing each component of the present invention.
FIG. 2 is an exploded view showing a photoelectric module of the present invention.
FIG. 2A is an exploded view showing a photoelectric module of another embodiment of the present invention.
FIG. 3 is an exploded view showing a base of the photoelectric module and a water-permeable unit of the present invention.
FIG. 4 is an exploded view showing a hollow unit cell of a water-filled structure of the present invention.
FIG. 5 is a perspective view showing the hollow unit cell of the water-filled structure of the present invention.
FIG. 5A is an enlarged view of a portion of the present invention of FIG. 5.
FIG. 6 is a schematic view showing a slurry pouring operation of the present invention.

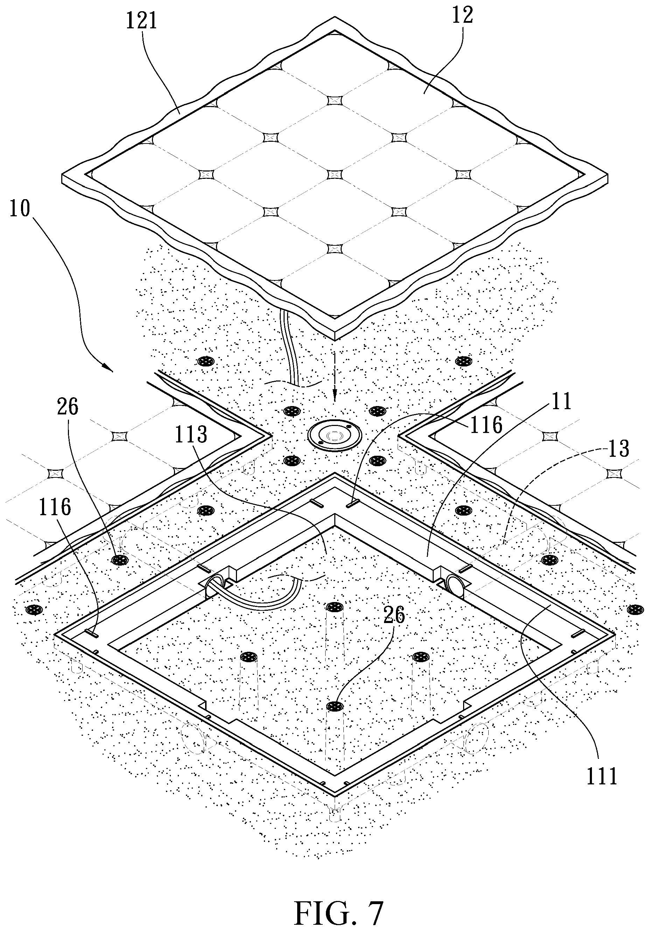

FIG. 7 is a schematic view showing mounting of a solar panel in the photoelectric module of the present invention.

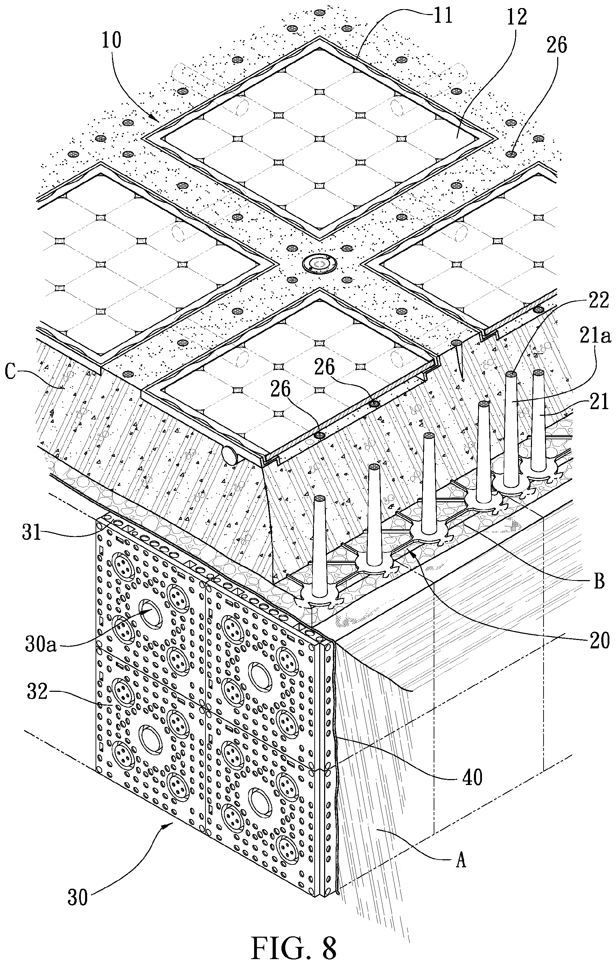

FIG. 8 is a schematic view showing the present invention after completion of construction.
FIG. 9 is a cross-sectional view showing a portion of the present invention of FIG. 8.
FIG. 10 is a cross-sectional view showing an embodiment of the present invention combined with a water-drawing pipe.
FIG. 11 is a schematic view showing the water-permeable unit of the present invention additionally provided with reinforcement bars.

### DETAILED DESCRIPTION OF THE PREFERRED EMBODIMENT

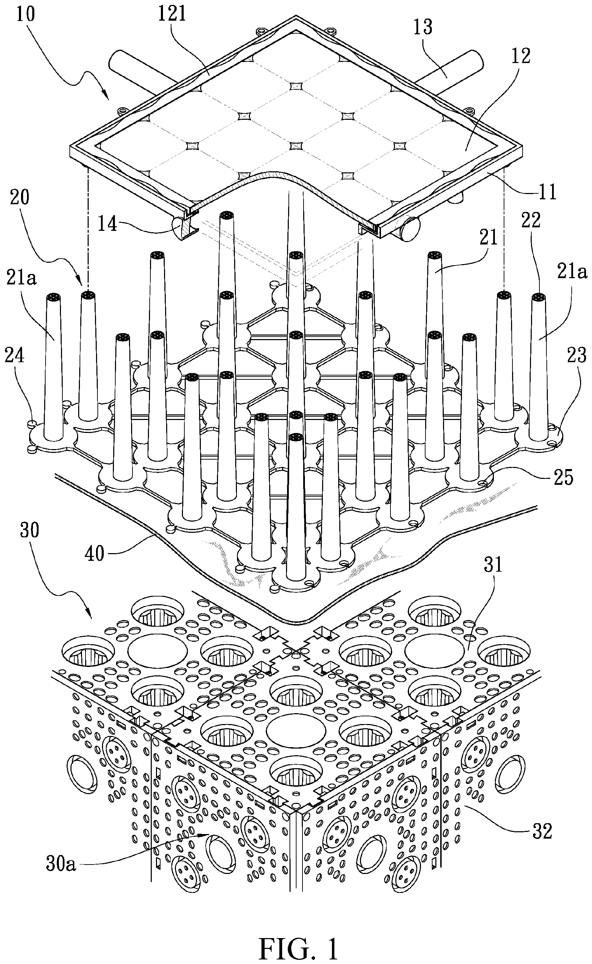

Referring to FIGS. 1-5, the present invention provides a photoelectric water-permeable pavement underground water storage automation system, which comprises a photoelectric module 10, a water-permeable unit 20, and a water-filled structure 30.

The photoelectric module 10 comprises a base 11, a solar panel 12, and communication pipes 13. The base 11 is laid on a ground surface. A water-permeable channel is formed on the periphery of the base. An enclosure frame 111 is arranged on a top of the base, and the solar panel 12 is mounted in an interior of the enclosure frame 111. Fixing members 112 are provided on a bottom face of the base 11 for locating on the water-permeable unit 20. Further, a bare empty area 113 is formed in an interior of the base 11, and through holes 114 are arranged at the periphery of the bare empty area 113 to extend outwards. The through holes 114 receive the communication pipes 13 to penetrate therein and combine therewith, such that the communication pipes 13 can be buried below the ground surface in a condition of connecting to and communicating with a base 11 on an adjacent side.

In case that no base 11 is arranged on the adjacent side of the base 11 to connect thereto and communicate therewith, the through hole 114 on such a side is fit with an end cap 14 for closure. In the present invention, the bottom face of the base 11 is further provided with a plurality of anchoring portions 115, which form a ground anchor structure after concrete slurry 60 sets and cures, so as to make the base 11 more securely positioned on the ground surface.

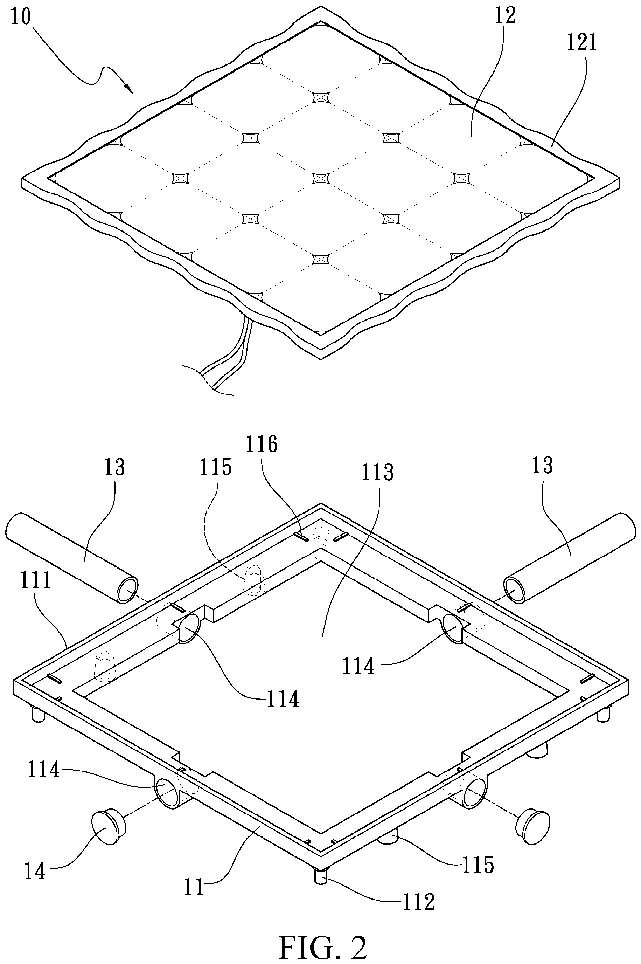

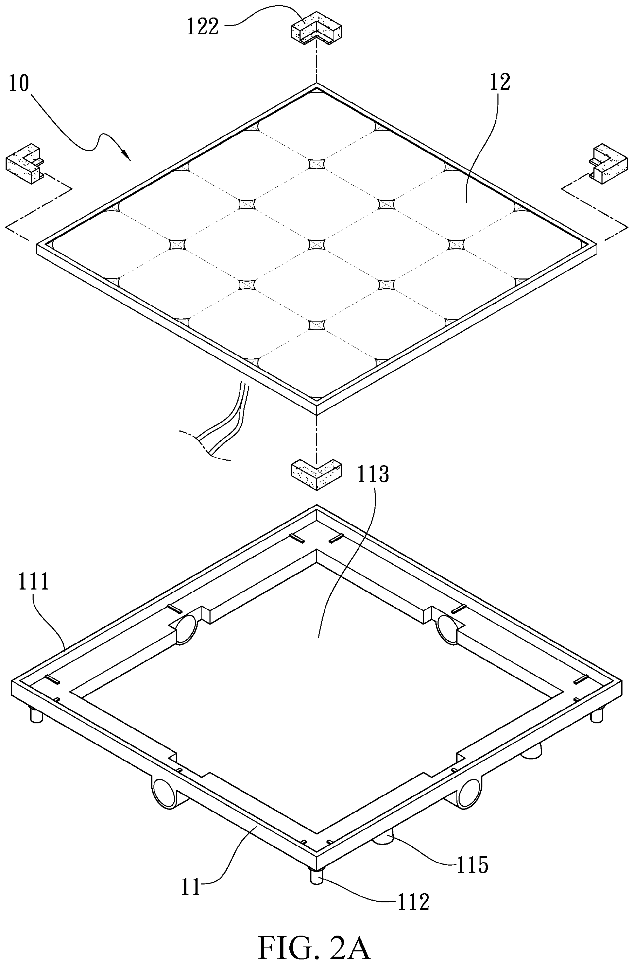

Referring to FIGS. 2 and 2A, for the water-permeable channel formed on the periphery of the base 11, the solar panel 12 of the photoelectric module 10 can be made in various forms according to the material of an outer frame 121, so that the photoelectric module 10, after fit into the base 11, is mounted on a stepped edge of the enclosure frame 111 of the base 11 in a manner of forming gaps therebetween. If the outer frame 121 is made of a plastic material, the periphery of the outer frame 121 is directly formed in a wavy shape, while the stepped edge the enclosure frame 111 of the base 11 is formed with raised ribs 116 arranged thereon, so that when the solar panel 12 is mounted on the stepped edge of the enclosure frame 111 of the base 11, gaps are formed therebetween, as shown in FIG. 2. If the outer frame 121 of the solar panel 12 is made of a metallic material, the volume of the solar panel 12 is arranged to be slightly smaller than an area of the base 11 that encloses the enclosure frame 111, and a pad block 122 is arranged at each of corners of the outer frame 121 of the solar panel 12, so that the periphery of the solar panel 12 and the enclosure frame 111 of the base 11 can be mutually fit to each other in such a manner as forming gaps therebetween, as shown in FIG. 2A. As such, easy mounting can be realized, while rainwater falling on the ground surface can pass through the gaps formed between the solar panel 12 and the enclosure frame 111 of the base 11 to downward penetrate through the gaps so formed to get into the bare empty area 113.

As an alternative embodiment not shown in the drawings, to form the water-permeable channel at the periphery of the base 11, the periphery of the base 11 is arranged as being integrally formed with water-permeable holes or water-permeable gaps therein, or alternatively, extra members are additionally fit thereto to form water-permeable holes or water-permeable gaps. In this way, the solar panel 12 can be directly mounted in the interior of the enclosure frame 111 without water-permeable hole or water-permeable gap formed by means of fitting between the peripheries of the two. This technical solution is also included in the scope of the claims of the present invention.

The water-permeable unit 20 comprises a frame body structure that is formed by interconnection of a plurality of vertical water-permeable pipes (21, 21a) arranged at intervals and is arranged under the photoelectric module 10, wherein the water-permeable pipes 21 a of the frame body structure, which are located between two adjacently arranged photoelectric modules 10, have a relatively long pipe body of which a top end is flush with the ground surface, while the remaining water-permeable pipes 21 are mounted under the base 11 of the photoelectric module 10. The water-permeable unit 20 includes a grating top-plate 22 arranged at an upper pipe opening of the water-permeable pipes (21, 21a), or a lid or a net cover is alternatively mounted thereon, so as to provide a blocking effect to prevent jamming resulting from pouring of concrete slurry 60, while a bottom of the pipe body is provided with an outward expanded connecting rib 23 for connection with another one of the water-permeable pipes (21, 21a), so that the water-permeable pipes (21, 21a) are interconnected to form a frame structure. Further, projecting tenons 24 and fitting mortises 25, which correspond to each other, are formed in outer circumferences of outermost connecting ribs 23 of the frame structure of two adjacent edges, so that another water-permeable unit 20 can be connected thereto for laying.

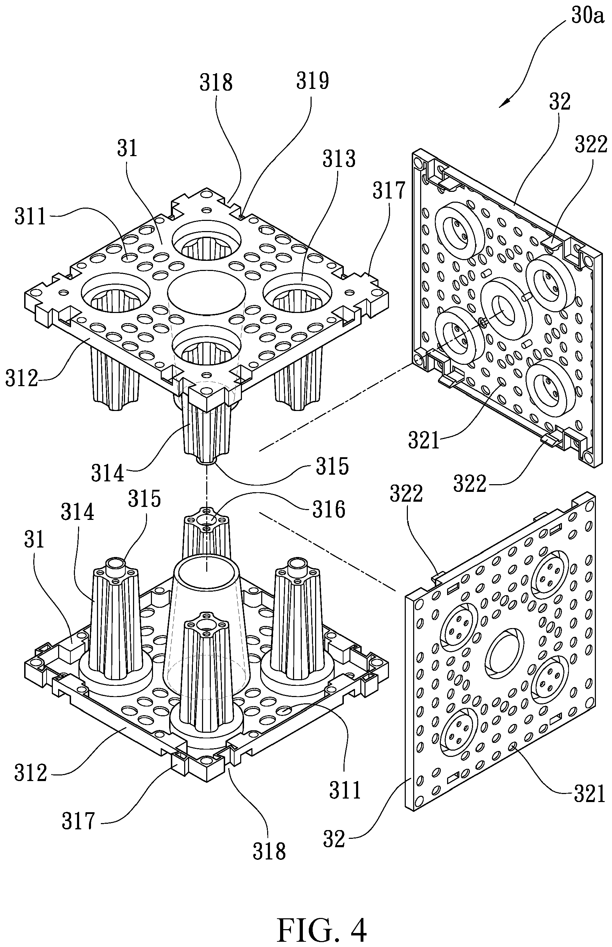

The water-filled structure 30 is arranged under the water-permeable unit 20 and is formed by combining multiple-hole hollow unit cells 30a, with an outside optionally covered by a piece of nonwoven fabric 40, or not covered by nonwoven fabric. In case of being covered by the nonwoven fabric, slurry flowing into an interior of the water-filled structure 30 can be prevented; and in a different geological area, it is feasible to select not to have the outside of the water-filled structure 30 covered with the nonwoven fabric 40, as shown in FIG. 4, but directly buried the water-filled structure 30 in an underground layer at a predetermined site. Further, the unit cell 30a is in the form of a pair of blocks 31, which are arranged at top and bottom sides in a manner of being mutually symmetric, combined with side plates 32 similarly formed with through holes 321. The block 31 is provided, at a top thereof, with a board 312 that is formed with through holes 311.

Recessed portions 313 are formed in a surface of the board 312, and tubular pillars 314 are formed in the recessed portions 313 and extend toward a bottom of the board 312. End portions of the tubular pillars 314 are respectively provided with projecting rings 315 and recessed troughs 316, which correspond to each other for mutually fitting to each other when the two blocks 312 on the top and bottom sides are combined with each other, and also for providing a supporting effect in the interior of the unit cell 30a. Further, the board 312 of the block 31 is provided, on the periphery thereof, with tenons 317 and mortises 318, which correspond to each other, to allow adjacent unit cells to combine together through mutual tenon joining.

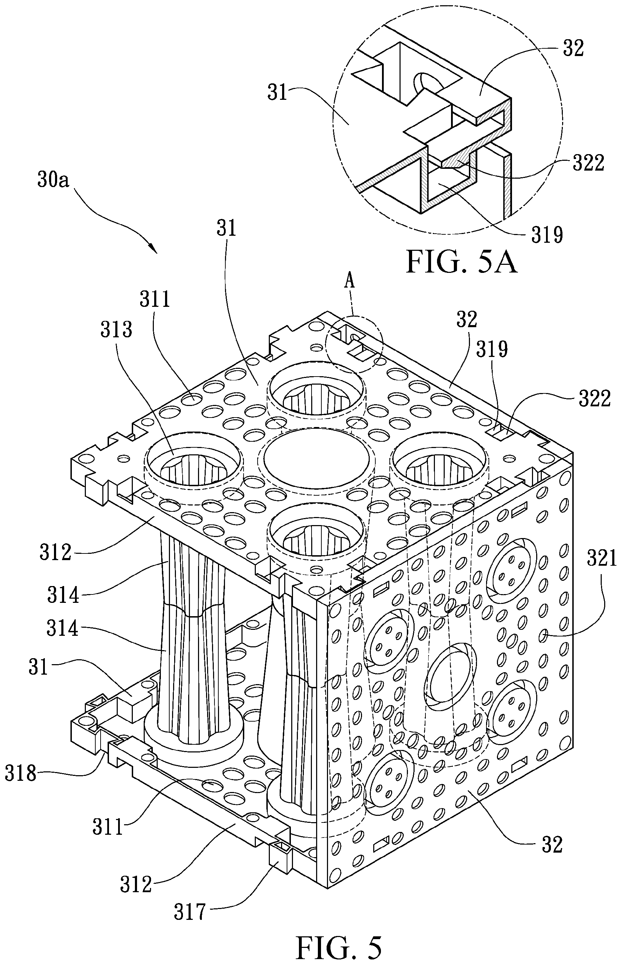

Referring to FIGS. 5 and 5A, the block is provided, on a circumference of the top thereof, with snap notches 319, and the side plates 32 are provided, at locations corresponding to the snap notches 319, with hooks 322 to allow the side plates 32 to cover, through snap fitting, outside of each unit cell 30a at an outermost circumference in order to form a water-filled structure 30.

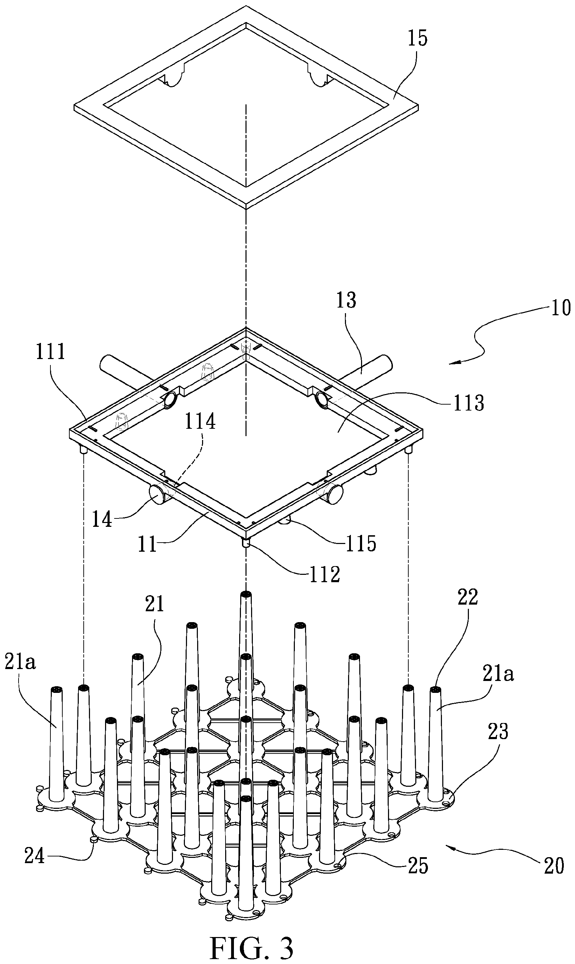

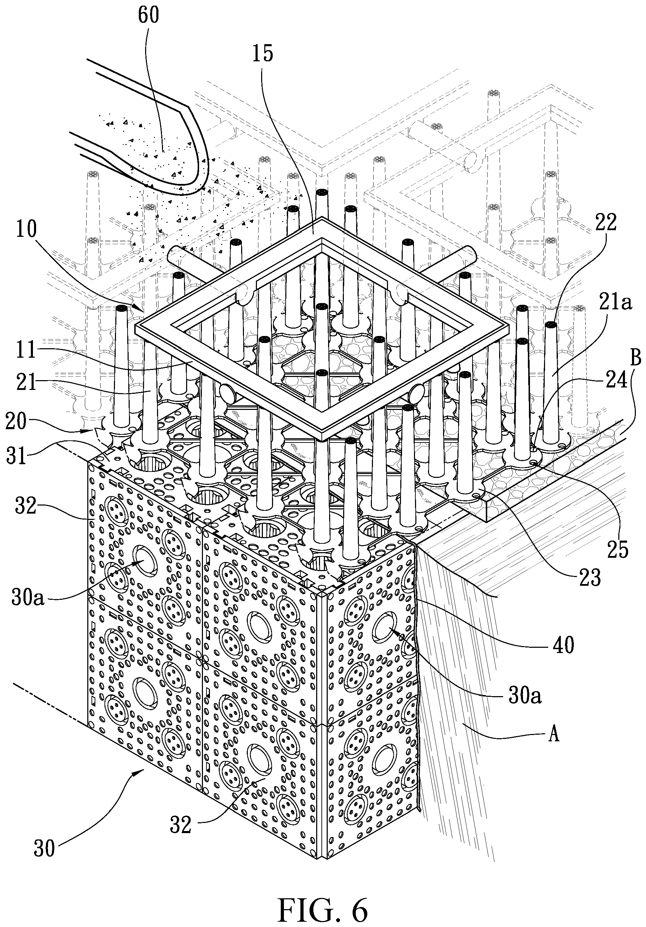

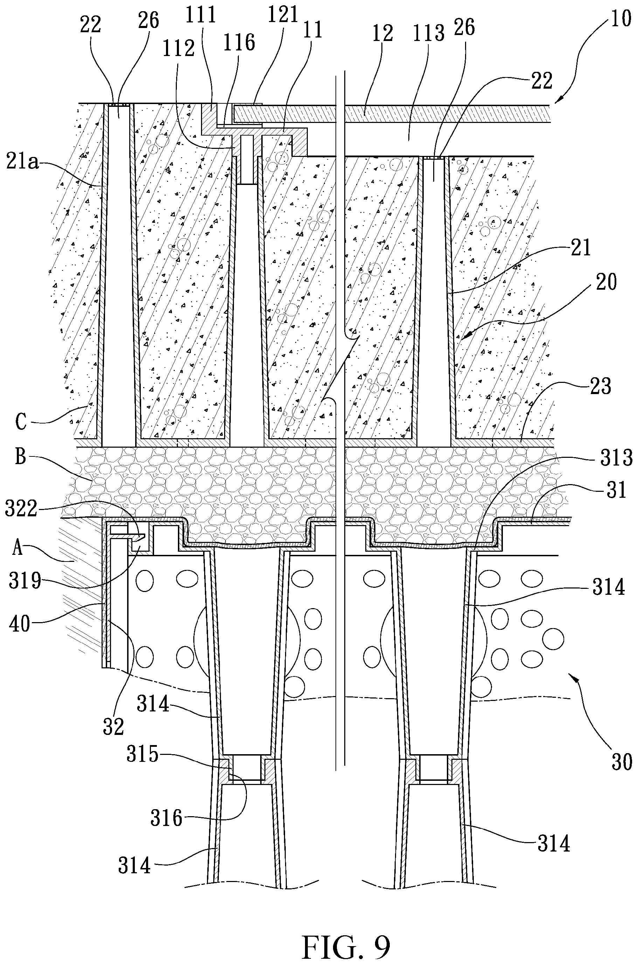

Referring to FIGS. 3, 6, and 9, in the implementation of the present invention, land preparation is first conducted on the site where the photoelectric water-permeable pavement is to be constructed, and based on the general pavement planning chart, the water-permeable units 20 and the water-filled structures 30 are completely laid and arranged on a construction area corresponding, in size, to the pavement to be constructed.

Options can be made on site for the water-filled structure 30, so that the water-filled structure according to the preferred embodiment of the present invention can be selected according to the on-site geological structure to have the outside covered with the nonwoven fabric 40, or not covered with the nonwoven fabric, and the nonwoven fabric 40 can be either water-permeable nonwoven fabric or non-water-permeable nonwoven fabric, and is directly buried, in a partly distributed manner in the predetermined location, in the underground soil layer A, and also, a water guide layer B is laid on the top, and the water-permeable unit 20 is completely positioned on the construction area where the pavement is to be constructed, so that a water guide layer B is interposed between the water-permeable unit 20 and the water-filled structure 30, wherein the water guide layer B can be a gravel layer, a water-permeable concrete layer, or paving of other water-permeable grade materials. Afterward, the fixing members 112 projecting from underside of the base 11 of the photoelectric module 10 are positioned and fixed preferably by fitting into and connecting with pipe openings of tops of the corresponding water-permeable pipes 21 of the water-permeable unit 20, so that the base 11 is securely laid atop the water-permeable unit 20, and the water-permeable pipes 21 are exposed and enclosed in the bare empty area 113, while the water-permeable pipes 21 a that are of a relatively long pipe body in the water-permeable unit 20 are arranged between adjacent bases 11. Further, the grating top-plates 22 arranged on the pipe openings of the water-permeable pipes 21 are made in the form of a thin sheet, so that in mounting the base 11 of the photoelectric module 10, the fixing members 112 at the bottoms thereof can be directly applied to easily break them into an open condition for receiving to fulfill fitting and positioning. Then, two ends of the communication pipes 13 are respectively fit into and connected with the through holes 114 of two adjacent bases 11 to achieve an inter-communicating state between each of the bases 11. Finally, a pouring operation of concrete slurry is carried out to form a water-permeable pavement. It is alternatively possible to adopt either one of a water-permeable pavement that is formed by directly paving a water-permeable material, or a water-permeable pavement formed by drilling holes in any kind of pavement to form water-permeable holes.

In case that the pipe openings of the water-permeable pipes 21 are provided with a lid or a net cover additionally mounted thereto, it is still possible to realize the blocking effect, and after the pouring operation of the concrete slurry 60, the lid that is temporarily set for closure is then removed, so that jamming caused in the operation of pouring concrete slurry can be avoided.

To ease the pouring operation of concrete slurry 60, a frame cover 15 is set on and covers between an inner side of the enclosure frame 111 on the top of the base 11 of the photoelectric module 10 and the bare empty area 113 before the grout pouring operation is conducted, or alternatively, a feasible way that is not shown in the drawings may be adopted to make the covering with a piece of adhesive tape or nonwoven fabric in order to prevent the region of the base 11 in which the solar panel 12 is to be mounted from being shielded by the concrete slurry 60, and after the concrete slurry 60 is set, the frame cover 15, the adhesive tape or nonwoven fabric is then removed. Further, during the performance of the pouring operation of the concrete slurry 60, since each exposed one of the water-permeable pipes (21, 21a) of the water-permeable unit 20 is provided with the grating top-plate 22 to cover the upper end opening thereof, so that the concrete slurry 60 is blocked outside the pipe opening, and thus, after the concrete slurry is moderately set and shaped, it only needs to apply a high-pressure spray gun to spray high-pressure air or water jet to remove slurry residues remaining on the grating top-plate 22 of the end opening of each of the water-permeable pipes (21, 21a) so as to construct a water-permeable pavement layer C of a concrete structure having a plurality of drainage holes 26 formed in the periphery of the base 11 and the interior of the bare empty area 113. Finally, the solar panels 12 are separately mounted in the bases 11 in an electrically connected manner by means of electrical cables extending through the communication pipes 13 to thereby complete the construction of the entire photoelectric water-permeable pavement.

In a rainy season, heavy rains may instantaneously fall on the ground surface, and by means of the drainage holes 26 formed between the photoelectric modules 10 in the ground surface, and the gaps between the solar panels 12 and the bases 11, rainwater penetrates down into the drainage holes 26 in the bare empty area 113, and by means of the water-permeable pipes (21, 21a), the rainwater is quickly drained into the underground water guide layer B. This achieves draining flood quickly in a short period of time and also helps re-supplementing underground water resources, so that a function of fast draining water from the ground surface in a short period of time and re-supplementing underground water is realized. A water storage space formed in an interior of the water-filled structure 30 allows fast and massive accumulation and storage of water to thereby achieve preventing the probability of occurrence of regional flooding in a short period of time. When the rainwater on the ground surface no longer penetrates downward and becomes, after a specific lapse of time, slowly seeping into the underground soil layer to re-supplement the underground water resources, a function of fast draining water from the ground surface in a short period of time and re-supplementing underground water is realized, or the rainwater can be stored in the water-filled structure 30 for subsequent use.

In sunny days, the solar panels 12 arranged with the photoelectric modules 10 may convert energy of sun light into electrical energy. And, also, when the temperature on the ground surface is high, the great content of water in the underground allows conversion into vapor and releases the vapor to the outside . For the photoelectric module 10, this can provide an effect of proper temperature lowering for the solar panel 12 to extend the service life of the solar panel 12, and also helps increase the light-electricity conversion efficiency, and may provide, for the entire environment, heat exchange in the environment to eliminate heat island effect or reduce heat island effect. Further, electricity generation achieved with the solar energy requires no consumption of fuel and has no noise and no air pollution and is a kind of clean energy that is friendly to the Earth, and the electrical power so generated can be effectively used in neighboring areas.

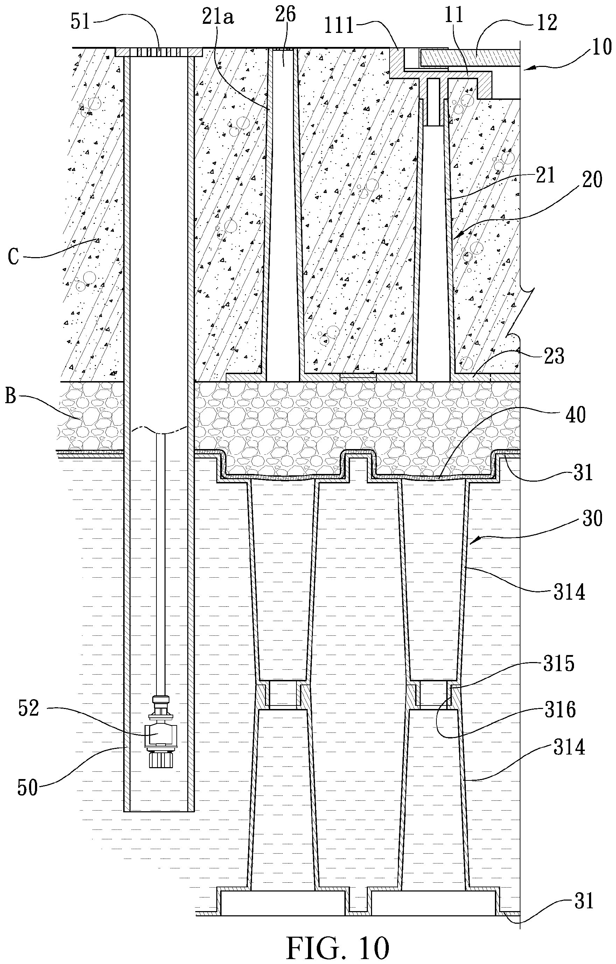

Referring to FIG. 10, in the implementation of the present invention, a water-drawing pipe 50 is arranged to penetrate into the interior of the water-filled structure 30 and to communicate with the ground surface. An outlet opening of the water-drawing pipe 50 at a ground surface end thereof is covered and closed by an end cap 51. A water pumping device 52 is arranged in the water-drawing pipe 50 to pump out the rainwater stored in the underground for livelihood water, environmental watering, automatic photoelectric panel cleaning and cooling, and also for cleaning and purification of water in the water-filled structure. If necessary, the photoelectric module 10 may provide natural energy to the water pumping device for pumping out the stored water in the interior of the water-filled structure 30 for watering flowers, grasses, and trees on the side slopes of walkways, so that to make operations of growing and maintaining trees easy and also to achieve a function of automatization therefor, and also to utilize the underground water resources so re-supplemented by pumping out to the ground surface for subsequent automatic cleaning of the photoelectric panels and lowering of temperature, and uses for general purposes.

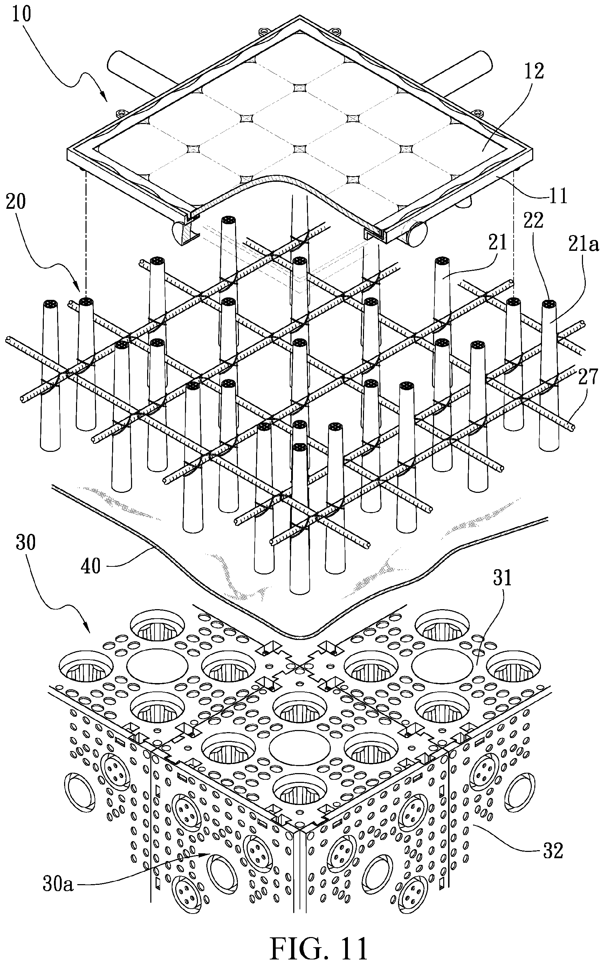

Referring to FIG. 11, before the pouring operation of the present invention is conducted, in assembling the water-permeable unit 20, in a different embodiment, reinforcement bars 27 or reinforcement nets may be arranged among the water-permeable pipes (21, 21a), so that in the subsequent operation of pouring concrete slurry, a sturdy concrete block layer can be obtained to improve the capacity of the entire pavement surface for carrying a load.

From the above, the following advantages are provided:
(1) The renewable, persistent, and clean green energy based power generation helps improve the energy structure, reduces the emission of green-house gases, and also reduce air pollution to improve environment quality.
(2) The runoff flows on the ground surface is reduced, and the probability of occurrence of flooding is reduced, and rainwater can be recycled and underground water resources can be re-supplemented, so as to not only achieve the purpose of water retention in the ground but also to release water moisture for heat exchange with ground surface temperature to regulate the temperature and humidity of the entirety of the environment to effectively reduce the heat island effect or prevent the occurrence of the heat island effect to thereby build up a more efficient sponge city ecological environment.
(3) A large-scale underground rainwater storage space is provided for subsequent use, so as to achieve an effect of sufficiently storing water and recovering rainwater resources for reuse, and preventing draught resulting from water insufficiency.
(4) A water-filled structure made by combining blocks forms can be used so as to have a high pore ratio and high supporting, and providing multiple features of being light in weight and small in size and high reusability, and allowing construction to be conducted more easily and faster to shorten the construction time, lower the cost, and also provide an effect of environmental protection.

In summary, the present invention provides an arrangement of photoelectric module and water-permeable unit in combination with a water-filled structure to construct a pavement that features both photoelectricity and utilization of regenerated resources of rainwater, showing a value of use in the industry, and as such, a patent application is proposed. However, the above provides only the preferred embodiments of the present invention and should not be construed as limiting to the scope of implementation of the present invention. All simple equivalent variations and modifications that are based on the claims and the contents of the specification of the present invention are considered falling in the scope of the present invention defined by the claims.

## Claims

1. A photoelectric water-permeable pavement underground water storage automation system, which comprises a photoelectric module (10), a water-permeable unit (20), and a water-filled structure (30), **characterized in that**:
the photoelectric module (10) is positioned on a ground surface and comprises a base (11), the base (11) having a periphery in which a water-permeable channel is arranged, the base (11) being provided, on a top thereof, with an enclosure frame (111), the enclosure frame (111) having an interior in which a solar panel (12) is received and mounted, the base (11) having a bottom face on which fixing members (112) are arranged for positioning atop the water-permeable unit (20), a bare empty area (113) being formed in an interior of the base (11), a periphery of the bare empty area (113) being formed with through holes (114) for receiving communication pipes (13) to fit therein for inter-connecting and communicating with an adjacent base (11);
the water-permeable unit (20) comprises a water-permeable pavement and is arranged under the photoelectric module (10); and
the water-filled structure (30) comprises an underground water storage space and is buried in an underground layer under the water-permeable unit (20);
wherein the pavement configuration formed of the above components allows the photoelectric module (10) to convert energy of sun light into electrical energy for use and also quickly drains rainwater to underground by means of the water-permeable unit (20) to store in the water-filled structure (30) for subsequent use.

2. The photoelectric water-permeable pavement underground water storage automation system according to claim 1, **characterized in that** water-permeable pipes (21a) of a frame body structure that are arranged between two adjacent photoelectric modules (10) have a relatively long pipe body and has a top end that is flush with the ground surface.

3. The photoelectric water-permeable pavement underground water storage automation system according to claim 1, **characterized in that** the water-permeable channel arranged in the periphery of the base (11) comprises a wavy configuration of a periphery of the solar panel (12) of the photoelectric module (10) positioned in an interior of the enclosure frame (111) of the base (11), and raised ribs (116) provided on a bottom of the enclosure frame (111), so as to form gaps between the solar panel (12) and the base (11) to allow the rainwater to penetrate down therethrough.

4. The photoelectric water-permeable pavement underground water storage automation system according to claim 1, **characterized in that** the water-permeable channel arranged in the periphery of the base (11) comprises a pad block (122) arranged at each of corners of the solar panel (12) of the photoelectric module (10) for fitting into an interior of the enclosure frame (111) of the base (11), and raised ribs (116) provided on a bottom of the enclosure frame (111), so as to form gaps between the solar panel (12) and the base (11) to allow the rainwater to penetrate down therethrough.

5. The photoelectric water-permeable pavement underground water storage automation system according to claim 1, **characterized in that** the water-permeable channel arranged in the periphery of the base (11) comprises water-permeable holes or water-permeable gaps that are integrally formed in the periphery of the base (11), an extra member being additionally fit thereto to form water-permeable holes water-permeable gaps.

6. The photoelectric water-permeable pavement underground water storage automation system according to claim 1, **characterized in that** an undersurface of the base (11) of the photoelectric module (10) is provided with anchoring portions (115) for more securely combining with concrete.

7. The photoelectric water-permeable pavement underground water storage automation system according to claim 1, **characterized in that** the water-permeable unit (20) comprises a frame body structure formed of a plurality of vertical water-permeable pipes (21, 21a) and is poured with concrete slurry to construct a water-permeable pavement.

8. The photoelectric water-permeable pavement underground water storage automation system according to claim 1, **characterized in that** the water-permeable unit (20) is formed as one of a water-permeable pavement that is formed by directly paving a water-permeable material and a water-permeable pavement in which holes are drilled in a pavement to form water-permeable holes.

9. The photoelectric water-permeable pavement underground water storage automation system according to claim 1, **characterized in that** a water guide layer (B) is arranged on a top of the water-permeable unit (20), and the water guide layer (B) comprises a gravel layer or a water-permeable concrete layer or paving of other water-permeable grade materials.

10. The photoelectric water-permeable pavement underground water storage automation system according to claim 1, **characterized in that** a hollow unit cell (30a) of the water-filled structure (30) is formed by combining blocks (31), the blocks (31) being provided, at a top thereof, with a board (312) that is formed with through holes (311), tubular pillars (314) extending from an underside of the board (31) and respectively provided, at end portions thereof, with projecting rings (315) and recessed troughs (316) for positioning during combination, the board (312) being provided, on a periphery thereof, with tenons (317) and mortises (318) that correspond to each other to allow for combination of adjacent unit cells (30a) through mutual tenon-joining, and a side plate (32), which is similarly formed with through holes (321), being attached to and covering an outside surface of each unit cell (30a) of an outermost circumference to form a water-filled structure (30).

11. The photoelectric water-permeable pavement underground water storage automation system according to claim 10, **characterized in that** the blocks (31) of each unit cell (30a) are provided, on a circumference of a top thereof, with snap notches (319), and the side plate (32) is provided, at locations corresponding to the snap notches (319), with hooks (322) to allow the side plate (32) to fix to the outside surface of the unit cell (30a).
